# EUROPEAN PATENT APPLICATION

(11) **EP 1 207 476 A2**
(43) Date of publication of application: **22.05.2002**
(21) Application number: 01124249.2
(22) Date of filing: 16.10.2001
(51) Int. Cl.: G06F 17/60

(54) **Server apparatus and network system**

(30) Priority: 17.10.2000 JP 2000316785
(71) Applicant: Toshiba Tec Kabushiki Kaisha, Tokyo 101-8442 (JP)
(72) Inventor: Iwase, Akinori, Toshiba Tec Kabushiki Kaisha, Kawasaki-shi, Kanagawa-ken 212-8501 (JP); Haraguchi, Tatsuya, Toshiba Tec Kabushiki Kaisha, Kawasaki-shi, Kanagawa-ken 212-8501 (JP); Ogura, Kazuhiro, Toshiba Tec Kabushiki Kaisha, Kawasaki-shi, Kanagawa-ken 212-8501 (JP)
(74) Representative: HOFFMANN - EITLE

(57) **Abstract**

In the present invention, if an attached file is attached to an electronic mail transferred to a portable telephone (1), a groupware server (2) notifies the portable telephone (1) that the text of the mail and the attached file are present and stores the attached file into a previously set storage destination in an Internet binder (3) based on a storage instruction issued from the portable telephone (1) in response to the notification.

## Description

This invention relates to a server apparatus in which a groupware is operated and a network system constructed by a second apparatus connected to the server apparatus and having a recording section such as a hard disk drive.

Recently, mobile terminals such as portable telephones are widely used. For example, some of the portable telephones have a display section constructed by a small-sized liquid crystal display device and have a transmitting/receiving function of an electronic mail or function of connection to Internet in addition to a portable telephone communication function.

Further, in the network system, a groupware is often used in order to support the operation by a group including a plurality of users. The groupware is used by personal computers (PC) and work stations connected to the network. The main object of the groupware is to enhance the productivity of the operation in the group by supporting common utilization of information and communication in the group. Further, the groupware has functions of electronic mail, electronic Bulletin Board, group scheduling, formation of common database for document information. For example, in the electronic mail function which is one of the functions of the groupware, electronic mails of various forms are transmitted or received in the group. In the electronic mail, data such as image data having a large amount of data or document data having a large amount of data is attached as an attached file to a text document as the text of the electronic mail in some cases.

Further, Some of PCs in the groupware have a function of transferring a mail or data addressed to a user to a previously set mobile terminal. However, for example, if data of a large data amount such as an electronic mail having an attached file of an extremely large data amount attached thereto is transferred to the mobile terminal as it is, the following problem occurs.
(1) Since the mobile terminal has only a small display section, an attached file which is difficult to be clearly seen if it is not displayed on a large screen is difficult to be clearly displayed on the display section of the mobile terminal.
(2) Since the capacity of a memory provided in the mobile terminal is small, the memory becomes insufficient in some cases if an attached file of large data amount is received.
(3) In the mobile terminal such as the portable telephone, a charging system for making a charge according to a data amount of transmitted/received data is applied in many cases and if an attached file of large data amount is received, communication traffic is increased, thereby causing the communication speed to be lowered or the communication cost to be raised. Further, if data of the attached file is not sufficiently used on the portable telephone side for the reasons described in the above terms (1), (2), the communication cost becomes wasteful.

As described above, this invention has been made to solve the problem that communication traffic is increased and the communication cost becomes often wasteful if the entire portion of data of large data amount addressed to a mobile terminal is transmitted to the mobile terminal and an object of this invention is to provide a server apparatus and network system capable of transmitting only main data among data addressed to the mobile terminal to the mobile terminal while suppressing an increase in the communication traffic and preventing occurrence of the wasteful communication cost when data of large data amount addressed to the mobile terminal is transmitted and effectively utilizing data among the data addressed to the mobile terminal which has not been transmitted to the mobile terminal.

Further, this invention has been made to solve the problem that communication traffic is increased and the communication cost becomes often wasteful if a file attached to an electronic mail is transmitted together with the text of the electronic mail to a mobile terminal and an object of this invention is to provide a server apparatus and network system capable of transmitting the electronic mail to the mobile terminal while suppressing an increase in the communication traffic and preventing occurrence of the wasteful communication cost when the file is attached to the electronic mail and effectively utilizing the file attached to the electronic mail.

According to an aspect of this invention, a server apparatus in which a groupware is operated comprises a memory to store data; an interface configured to transmit data to a mobile terminal; and a controller configured to form data for transmission to the mobile terminal and separately manage the thus formed data for transmission and data among data addressed to the mobile terminal which is not transmitted to the mobile terminal and is stored in the memory when the data addressed to the mobile terminal is transmitted to the mobile terminal via the interface.

According to another aspect of this invention, a network system is a system comprising a first apparatus in which a groupware is operated; and a second apparatus connected to the first apparatus via a network; the first apparatus includes a first interface configured to transmit data to a mobile terminal, a second interface configured to transmit data to the second apparatus, and a controller configured to form data for transmission to the mobile terminal when data addressed to the mobile terminal is transmitted to the mobile terminal, transmit the thus formed data for transmission to the mobile terminal via the first interface and transmit data among the data addressed to the mobile terminal which has not been transmitted to the mobile terminal to the second apparatus via the second interface as storage data according to an instruction from the mobile terminal, and the second apparatus includes a memory to store storage data transmitted from the first apparatus via the second interface.

According to still another aspect of this invention, a server apparatus in which a groupware is operated comprises a memory to store data; an interface configured to transmit data to a mobile terminal; and a controller configured to manage an electronic mail in the groupware and form a text of the electronic mail for transmission to the mobile terminal if file data attached to the electronic mail addressed to the mobile terminal exists and separately managing the thus formed text of the electronic mail and attached file.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing the schematic construction of a network system according to an embodiment of this invention;
FIG. 2 is a block diagram showing the schematic construction of a portable telephone;
FIG. 3 is a block diagram showing the schematic construction of a groupware server;
FIG. 4 is a block diagram showing the schematic construction of an Internet binder;
FIG. 5 is a block diagram showing the schematic construction of a digital multifunctional processor (MFP);
FIG. 6 is a diagram showing an example of the construction of a mail information database;
FIG. 7 is a diagram showing an example of the construction of a storage destination specifying database;
FIG. 8 is a diagram showing an example of the construction of a received mail database;
FIG. 9 is a diagram showing an example of the construction of a user information database;
FIG. 10 is a diagram showing an example of the construction of a storage destination database;
FIG. 11 is a diagram showing an example of the construction of a storage file information database;
FIG. 12 is a diagram showing an example of the construction of a printer information database;
FIG. 13 is a diagram showing an example of the construction of a printing history database;
FIG. 14 is a diagram showing a display example by a display section of a portable telephone;
FIG. 15 is a diagram showing a display example by the display section of the portable telephone;
FIG. 16 is a diagram showing a display example by the display section of the portable telephone;
FIG. 17 is a diagram showing a display example by the display section of the portable telephone;
FIG. 18 is a diagram showing a display example by a display section of MFP;
FIG. 19 is a diagram showing a display example by the display section of MFP;
FIG. 20 is a diagram showing a display example by the display section of MFP;
FIG. 21 is a diagram for illustrating data transmitted/received between a portable telephone 1, groupware server and Internet binder; and
FIG. 22 is a flowchart for illustrating the operation of the groupware server.

There will now be described an embodiment of this invention with reference to the accompanying drawings.

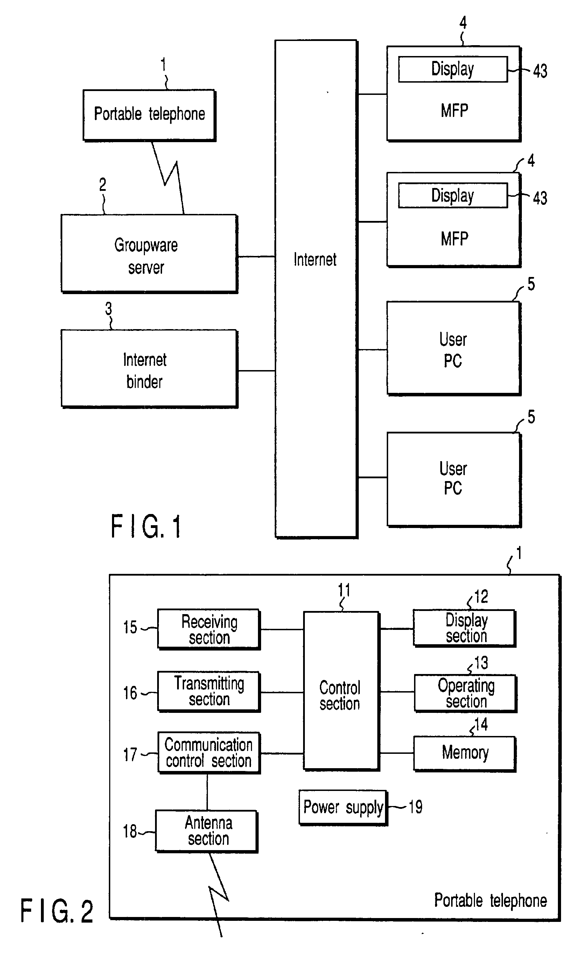

FIG. 1 is a diagram showing the schematic construction of a network system according to an embodiment of this invention. As shown in FIG. 1, the network system includes a portable telephone (mobile terminal) 1, groupware server (server apparatus, first apparatus) 2, Internet binder (second apparatus) 3, digital multifunctional processor (MFP) 4, user PC 5 and the like.

The portable telephone 1 is connected to the groupware server 2 to transmit or receive data. Thus, the portable telephone 1 can receive an electronic mail (which is hereinafter simply referred to as a mail) from the groupware server 2. In the mobile system of this embodiment, the portable telephone 1 is explained as a mobile terminal, but this is not limitative and a mobile terminal such as a mobile mail terminal or PDA (personal digital assistant) which can receive an electronic mail can also be used as the mobile terminal in the same manner.

The groupware server 2 is a server apparatus constructed by a personal computer (PC) or the like. The groupware server 2 has a groupware installed therein. The groupware server 2 has a function of being connected to the portable telephone 1 and a function of being connected to Internet 6.

In the groupware server 2, the groupware is operated and it provides the function of the groupware to the users. An electronic mail function is provided as one of the functions provided by the groupware server 2. That is, the groupware server is utilized by a personal computer (PC) or work station connected to the network. The groupware server is used to enhance the productivity of the operation by supporting common utilization of information and communication in the group. Further, the groupware has an electronic mail function and other functions of electronic Bulletin Board, group scheduling, formation of common database for document information.

In the present embodiment, the electronic mail function is explained as an example, but this is not limitative and the present embodiment can be applied to a case of data transmission realized by use of the groupware function.

The Internet binder 3 is an apparatus constructed by a personal computer. The Internet binder 3 transmits or receives data via Internet and holds (stores, saves) data of a file, for example.

The MFP 4 is a digital copying machine including a printing device (printer) and image reading device (scanner) and has a function of being connected to a public communication line. The MFP 4 is connected to Internet by use of the function of being connected to the public communication line to transmit or receive data via Internet. Further, the MFP 4 includes a display 43 constructed by a liquid crystal display device containing a touch panel.

The user PC 5 is a personal computer for the user and has a function of being connected to Internet.

Next, the construction of the portable telephone 1 is explained.

FIG. 2 is a block diagram showing the schematic construction of the portable telephone. As shown in FIG. 2, the portable telephone 1 includes a control section 11, display section 12, operating section 13, memory 14, receiving section 15, transmitting section 16, communication control section 17, antenna section 18 and power supply section 19.

The control section 11 controls the whole portion of the portable telephone 1. The display section 12 is constructed by a liquid crystal display unit to display various messages. The operating section 13 includes various types of keys such as a ten-key pad, cursor key to input an operation instruction.

The memory 14 includes a storage section used for storing preset data such as a control program and user information and a storage section used for temporarily storing various information, control data and the like. The receiving section 15 is a speaker for outputting a voice when conversation is made by use of the telephone function. The transmitting section 16 is a microphone for inputting a voice when conversation is made by use of the telephone function.

The communication control section 17 is an interface for controlling communication with an external device via the antenna section 18. The power supply section 19 is constructed by a battery, for example, and supplies electric power to each section of the portable telephone 1.

Next, the construction of the groupware server 2 is explained.

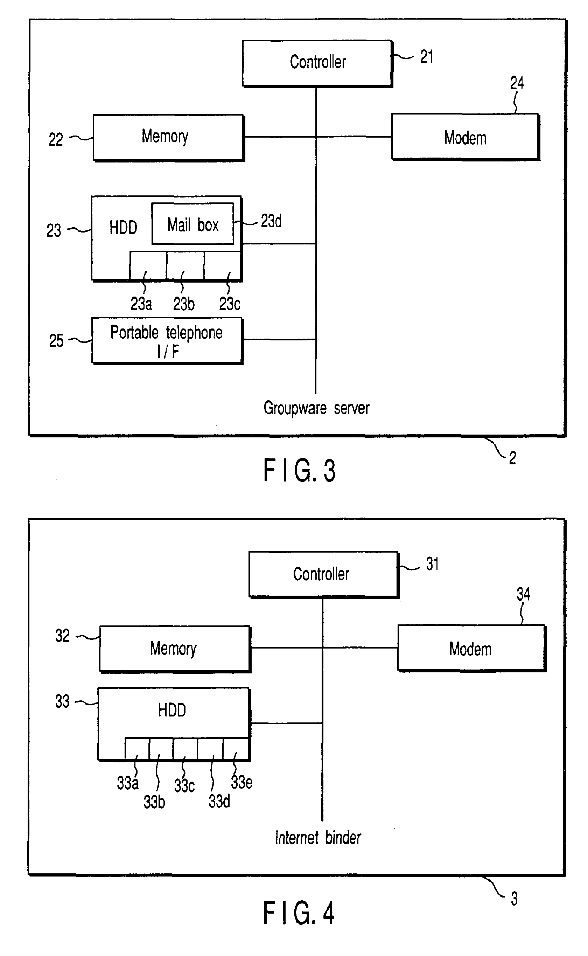

FIG. 3 is a diagram showing the schematic construction of the groupware server 2. As shown in FIG. 3, the groupware server 2 includes a controller 21, memory 22, hard disk drive (HDD) 23, modem 24, portable telephone interface 25 and the like.

The controller 21 uses a CPU. The controller 21 controls the whole operation of the groupware server 2 and is operated according to a program which is previously stored. The memory 22 is used to temporarily store various information items and control data when the controller 21 is operated.

The HDD 23 has previously set information stored therein and stores various data items when the groupware server 2 is operated. Further, the HDD 23 includes a plurality of databases 23a, 23b, 23c. The HDD 23 further includes a mail box 23d for storing an electronic mail addressed to each device in the groupware. Therefore, when the groupware server 2 receives an electronic mail addressed to the portable telephone 1, the electronic mail addressed to the portable telephone 1 is stored in the mail box 23d. The modem (second interface) 24 is an interface connected to Internet or the Internet binder 3. The portable telephone interface (first interface) 25 is an interface connected to the portable telephone.

Next, the construction of the Internet binder 3 is explained.

FIG. 4 is a diagram showing the schematic construction of the Internet binder 3. As shown in FIG. 4, the Internet binder 3 includes a controller 31, memory 32, hard disk drive (HDD) 33, modem 34 and the like.

The controller 31 uses a CPU. The controller 31 controls the whole operation of the Internet binder 3 and is operated according to a program which is previously stored. The memory 32 is used to temporarily store various information items and control data when the controller 31 is operated. The HDD (memory) 33 stores various data items of files, for example, as information to be stored. The HDD 33 includes various databases 33a, 33b, 33c, 33d, 33e. The modem 34 is an interface connected to Internet.

Next, the schematic construction of the digital multifunctional processor 4 is explained.

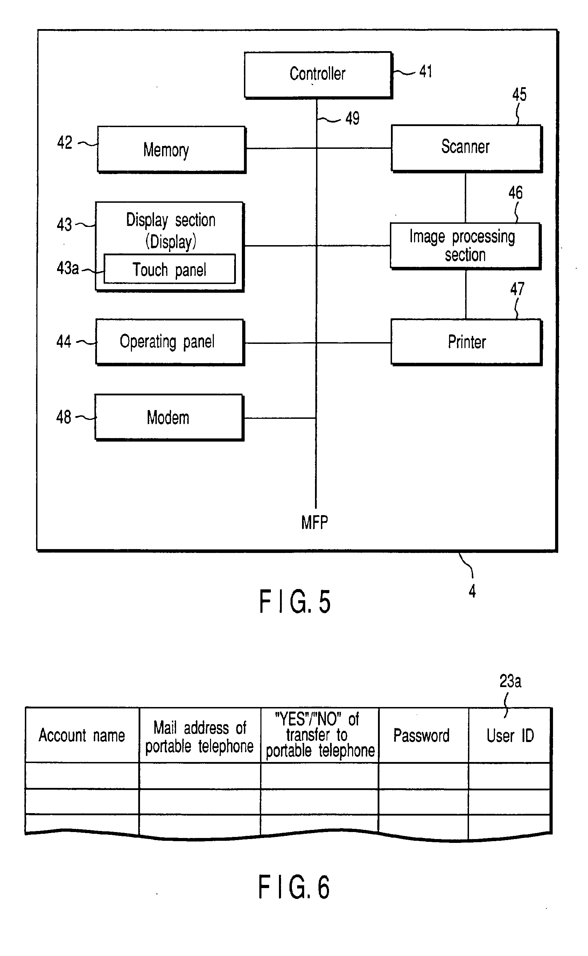

FIG. 5 is a diagram showing the schematic construction of the digital multifunctional processor 4. As shown in FIG. 5, the digital multifunctional processor 4 includes a controller 41, memory 42, display section 43, operating section 44, scanner 45, image processing section 46, printer 47, modem 48 and the like and the respective constituting elements are connected to one another via a bus 49 with the controller 41 set at the center.

The controller 41 uses a CPU. The controller 41 controls the whole operation of the digital multifunctional processor 4 and is operated according to a program which is previously stored. The memory 42 is used to temporarily store various information items and control data when the controller 41 is operated. The display section 43 is a display constructed by a liquid crystal display device containing a touch panel 43a. The operating section 44 includes hard keys such as a ten-key pad, cursor key and copy start key. Various operations in the digital multifunctional processor 4 are effected by use of the hard keys of the operating section 44 and the touch panel 43a.

The scanner 45 optically scans a document and converts a document image into image data. The image processing section 46 subjects the image data to various processes. The printer 47 prints image data on paper. As the printer 47, various types of printers such as an electrophotographic printer or ink jet type printer may be considered, but in this embodiment, it is assumed that the electrophotographic printer is used. The modem 48 is an interface connected to Internet.

Next, the database managed by the groupware server 2 is explained.

FIG. 6 is a diagram showing an example of the construction of the mail information database 23a stored in the HDD 23 of the groupware server 2.

As shown in FIG. 6, the mail information database 23a is constructed by various items of an account name, a mail address of a portable telephone, "YES"/"NO" of transfer to the portable telephone, password, user ID and the like.

In the item of the account name, a mail destination name (account name) such as a user name is recorded. In the item of the mail address of the portable telephone, a mail address of the portable telephone of the user corresponding to the account name is recorded.

In the item of "YES"/"NO" of transfer to the portable telephone, information indicating whether or not a mail is transferred to the mail address of the portable telephone when the mail addressed to the user corresponding to the account name is received by the groupware is recorded.

In the item of the password, a password given to the user is recorded. In the item of the user ID, a user ID given to the user is recorded. The user ID may be the same as the account name or may be different from the account name.

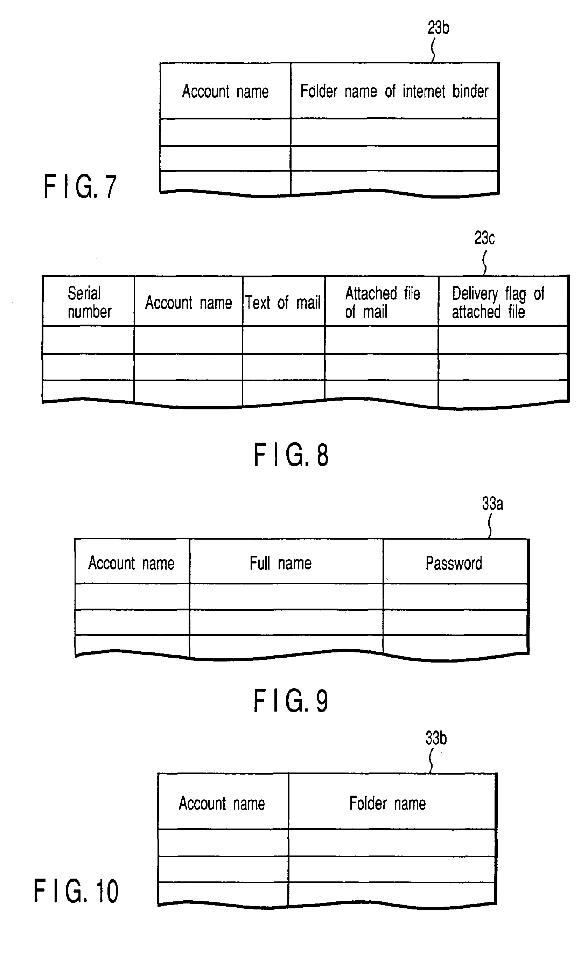

FIG. 7 is a diagram showing an example of the construction of the storage destination specifying database 23b stored in the HDD 23 of the groupware server 2.

As shown in FIG. 7, the storage destination specifying database 23b is constructed by items of an account name and a folder name of the Internet binder.

In the item of the account name, a mail destination name (account name) such as a user name is recorded. In the item of the folder name of the Internet binder, a folder name corresponding to the account name and stored in the HDD 33 of the Internet binder 3 is specified. The folder name indicates a storage location in the Internet binder 3 for WEB or the mail of a user corresponding to the account name.

FIG. 8 is a diagram showing an example of the construction of the received mail database 23c stored in the HDD 23 of the groupware server 2.

As shown in FIG. 8, the received mail database 23c is constructed by items of a serial number, account name, mail text, attached file, delivery flag of the attached file and the like.

In the item of the serial number, a consecutive number as the serial number is recorded. The serial number is a number given in a recording order of a corresponding item. In the item of the account name, a mail destination name (account name) such as a user name is recorded.

In the item of the mail text, the text (information transmitted to the portable telephone) of the mail addressed to the user of the account name is recorded. In the item of the attached file, an attached file name is recorded if the attached file (information to be stored) is attached to the text of a mail addressed to a user of the account name.

In the item of the attached file delivery flag, a flag indicating whether or not the attached file is delivered to the Internet binder 3 is recorded. The delivery flag is set if an attached file is stored in the Internet binder 3 in a case where the attached file is present in the mail.

Next, a database managed by the Internet binder 3 is explained.

FIG. 9 is a diagram showing an example of the construction of the user information database 33a stored in the HDD 33 of the Internet binder 3.

As shown in FIG. 9, the user information database 33a is constructed by items of an account name, full name, password and the like.

In the item of the account name, a mail destination name (account name) such as a user name is recorded. In the item of the full name, the name (full name) of the user is recorded. In the item of the password, a password given to the user is recorded.

FIG. 10 is a diagram showing an example of the construction of the storage destination database 33b stored in the HDD 33 of the Internet binder 3.

As shown in FIG. 10, the storage destination database 33b is constructed by items of an account name, folder name and the like.

In the item of the account name, a mail destination name (account name) such as a user name is recorded. In the item of the folder name, a folder name in the HDD 33 for storing a mail addressed to the user corresponding to the account name is recorded.

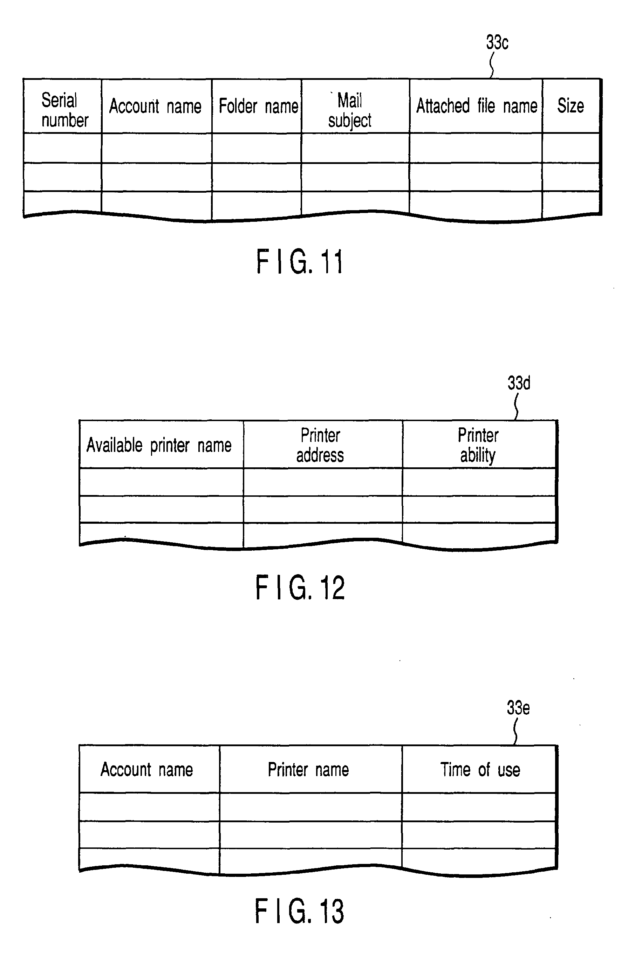

FIG. 11 is a diagram showing an example of the construction of the storage file information database 33c stored in the HDD 33 of the Internet binder 3.

As shown in FIG. 11, the storage file information database 33c is constructed by items of a serial number, account name, folder name, mail subject, attached file, size and the like.

In the item of the serial number, a consecutive number as a serial number is recorded. The serial number is a number given in a recording order of a corresponding item. In the item of the account name, a mail destination name (account name) such as a user name is recorded.

In the item of the folder name, a folder name in the HDD 33 for storing a mail addressed to the user corresponding to the account name is recorded. In the item of the mail subject, information indicating the contents of a file such as the type of the file is recorded.

In the item of the attached file, an attached file name is recorded if the attached file is attached to the text of a mail addressed to a user of the account name. In the item of the size, a size (data size) of the attached file is recorded.

The user information database, storage destination database and storage file information database are data used by the Internet binder 3 to manage the attached file.

FIG. 12 is a diagram showing an example of the construction of the printer information database 33d stored in the HDD 33 of the Internet binder 3.

As shown in FIG. 12, the printer information database 33d is constructed by an available printer name, address of the printer, printer ability and the like.

In the item of the available printer name, an available printer name or names are recorded. In the item of the address of the printer, an address indicating the location of the printer on the network which corresponds to the available printer name is recorded. In the item of the printer ability, information indicating the ability of the printer corresponding to the available printer name is recorded. For example, as the ability of the printer, information indicating color or monochrome, printing resolution, printable paper size and the like is recorded.

FIG. 13 is a diagram showing an example of the construction of the printing history database 33e stored in the HDD 33 of the Internet binder 3.

As shown in FIG. 13, the printing history database 33e is constructed by an account name, printer name, time of use of the printer and the like. The printing history database 33e is a database for managing the history of the printer used and data indicating the history is recorded therein for each time of use of the printer.

In the item of the account name, a mail destination name (account name) such as the name of a user who has used the printer is recorded. In the item of the printer name, the name of the printer used is recorded. In the item of the time of use, time at which the printer has been used is recorded.

Next, display examples on a display section 12 of the portable telephone 1 are explained.

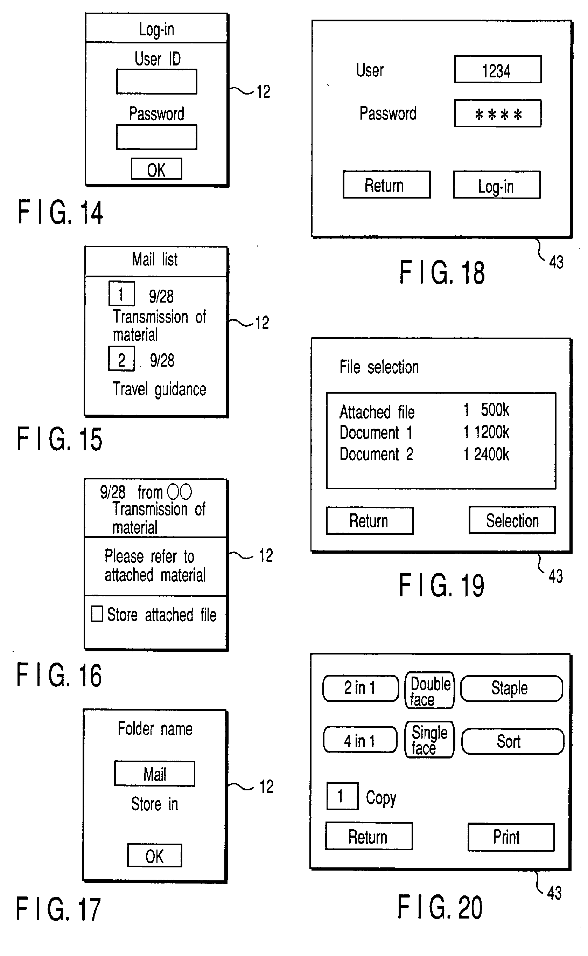

FIGS. 14 to 17 are diagrams showing display examples on the display section 12 of the portable telephone 1.

FIG. 14 is a diagram showing a display example when a mail is received from the portable telephone 1 and log-in (access) is made from the portable telephone 1 to the groupware server 2. In the display example of FIG. 14, a user ID input column and a password input column are displayed.

When a mail is received on the display screen, the user inputs the user ID and password by operating the operating section 13. Data items input as the user ID and password are displayed on the respective input columns.

FIG. 15 shows an example in which a mail list addressed to the user and stored in the groupware server 2 is displayed on the display section 12 after the portable telephone 1 logs in the groupware server 3.

In the display example shown in FIG. 15, two mails addressed to the user are displayed in a list form. If the user wants to see the contents of the mail displayed on the display section 12, the user selects a desired mail by operating the operating section 13. If the mail is thus selected, the portable telephone 1 fetches the text of the selected mail from the groupware server 2.

FIG. 16 is a diagram showing an example of the text of the mail fetched from the groupware server 2 and displayed on the display section 12.

In the display example shown in FIG. 16, the text of the mail of "Please refer to attached material" is displayed together with the date of the mail, the transmission source of the mail and the title of the mail. Further, in the above display example, guidance indicating that the attached file is present is displayed and guidance for causing the user to determine whether the attached file is stored or not is displayed.

Thus, if the attached file is present in addition to the text of the mail, the user determines whether the attached file is stored or not. If the attached file is stored, the user specifies storage of the attached file by operating the operating section 13. For example, in the display example shown in FIG. 16, storage of the attached file is specified by checking the check box in which "YES" or "NO" for storage of the attached file can be specified.

Further, if the user specifies storage of the attached file on the display screen shown in FIG. 16, guidance indicating the folder name of the storage destination of the attached file is displayed on the display section 12 of the portable telephone. FIG. 17 shows a display example of guidance indicating the folder name of the storage destination of the attached file. It is assumed that the storage destination of the attached file is previously set for each user by the storage destination specifying table 23b.

In the display example shown in FIG. 17, a case wherein the storage destination is previously set as the folder with a folder name of "mail" is shown. The user selects "OK" by operating the operating panel 13 when determining the folder name of the storage destination by observing the above display screen. Then, specification of storage of the attached file is transmitted from the portable telephone 1 to the groupware server 2.

As described above, if a mail addressed to the portable telephone has an attached file, the groupware server transmits only a message indicating that the attached file is present to the portable telephone without transmitting the attached file of the mail to the portable telephone. When receiving the message indicating that the attached file is present, the portable telephone displays that the attached file is present on the display section. If the user of the portable telephone specifies storage of the attached file in response to the message, the groupware server stores the attached file which has not been transmitted to the portable telephone into a storage location in the Internet binder which is previously set. Therefore, the attached file of the mail is stored into a preset location without being transmitted to the portable telephone.

Thus, communication traffic for transmitting the attached file to the portable telephone can be saved and the contents of the attached file can be stored so as to be utilized by the user.

Further, in the above example, the folder name of the storage destination is fixed by the previously set folder, but it is possible to permit the user to specify a folder of the storage destination of the attached file on the display screen as shown in FIG. 17. In this case, the folder name of the storage destination is specified or instructed together with specification of storage of the attached file from the portable telephone to the groupware server 2. The groupware server 2 which has received the above specification stores the attached file into the specified folder irrespective of the previously set folder.

Next, a case wherein the attached file stored in the Internet binder 3 is printed by the MFP 4 is explained.

It is possible to fetch the attached file stored in the Internet binder 3 by use of the user PC 5 and directly print the same by use of the MFP 4. In this example, the printing operation of the attached file is explained according to the operation procedure of the MFP 4.

FIGS. 18 to 20 are diagrams showing display examples of the display section 43 of the MFP 4 when the attached file is printed by use of the MFP 4.

First, the user inputs a user ID and password by operating the touch panel 43a and operating panel 44 when the attached file stored in the Internet binder 3 is printed by use of the MFP 4.

FIG. 18 shows a display example of an input screen of the user ID and password. In the input screen shown in FIG. 18, a user ID input column, password input column, "return" key and "log-in" key are displayed on the display section 43. The "return" key and "log-in" key are keys which can be selected by use of the touch panel 43a.

While the above input screen is being displayed, the user inputs a user ID and password. Then, if the input user ID and password meet the requirement, the user touches the "log-in" key by use of the touch panel 43a.

Then, the MFP 4 transmits the user ID and password and effects a process for connection to the Internet binder 3. If connection with the MFP 4 is made, the Internet binder 3 transmits a stored list of files corresponding to the user ID transmitted from the MFP 4 to the MFP 4.

The MFP 4 which has received the file list displays a file selection screen on the display section 43 based on the file list received from the Internet binder 3.

FIG. 19 is a diagram showing a display example in which the file list received from the Internet binder 3 is displayed on the display section 43. In this case, a file can be selected by touching the file displayed on the display section 43 by use of the touch panel 43a. In the display example shown in FIG. 19, the above file selection screen is displayed on the display section 43.

The user selects a desired file on the file selection screen by use of the touch panel 43a and touches the "selection" key. Then, the MFP 4 requests the Internet binder 3 to transfer the selected file.

The Internet binder 3 transfers the file requested by the MFP 4 to the MFP 4. When receiving the file from the Internet binder 3, the MFP 4 displays a print setting screen on the display section 43.

FIG. 20 shows a display example of the print setting screen. If the user selects "print" on the print setting screen, the MFP 4 prints the file transferred from the Internet binder 3.

Next, data transmitted/received between the portable telephone 1, groupware server 2 and Internet binder 3 is explained.

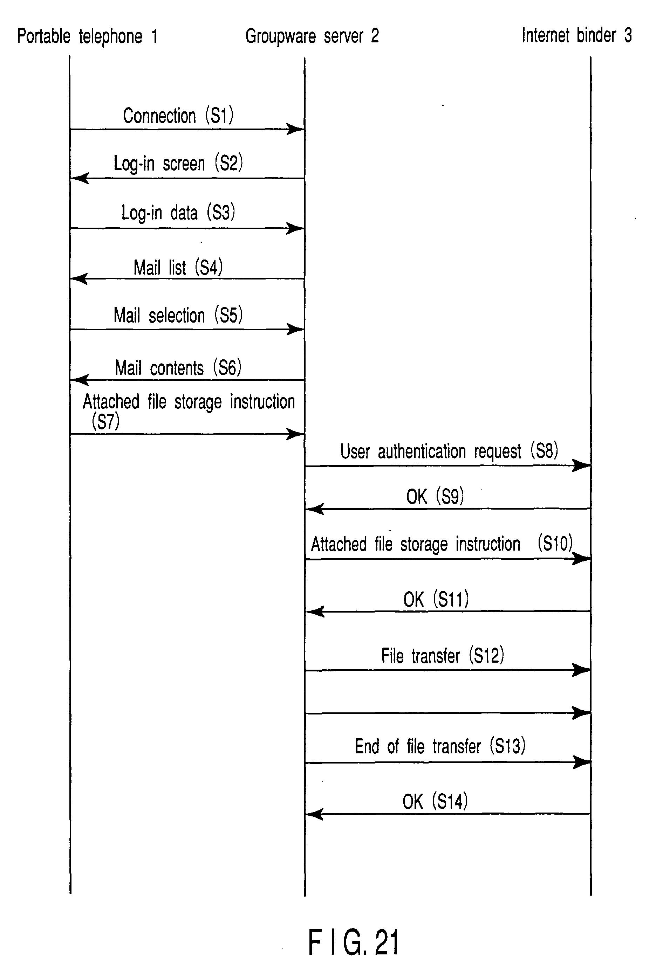

FIG. 21 is a diagram for illustrating data transmitted/received between the portable telephone 1, groupware server 2 and Internet binder 3. In this case, it is supposed that a mail received by the portable telephone 1 contains an attached file and the operation for storing the attached file in the Internet binder 3 is explained.

As shown in FIG. 21, if the portable telephone 1 makes a request for connection (step S1), the groupware server 2 transfers a log-in screen to be displayed on the display section 12 of the portable telephone 1 as shown in FIG. 14 to the portable telephone 1 (step S2).

When the portable telephone 1 receives the log-in screen from the groupware server 2, it displays the log-in screen as shown in FIG. 14 on the display section 12 and suggests the user to input the user ID and password. If the user inputs the user ID and password on the log-in screen, the portable telephone 1 transmits log-in data to the groupware server 2 based on the input user ID and password (step S3).

When receiving the log-in data from the portable telephone 1, the groupware server 2 determines permission or inhibition of the log-in according to whether or not the received user ID and password coincide with the user ID and password recorded on the mail information database 23a.

If the groupware server 2 determines permission of the log-in of the portable telephone 1 in the above determination step, it searches for all of the mails having account names corresponding to the user ID based on the received mail database 23c. The list of the mails searched for by the searching process is transmitted to the portable telephone 1 by the groupware server 2 (step S4).

When receiving the mail list from the groupware server 2, the portable telephone 1 displays a mail selection screen as shown in FIG. 15 on the display section 12. If a mail is selected on the selection screen by the user, the portable telephone 1 transmits a transfer request of the selected mail to the groupware server 2 (step S5).

When receiving the mail transfer request from the portable telephone 1, the groupware server 2 transmits the contents of the mail based on the mail database 23c to the portable telephone 1 (step S6). At this time, the groupware server 2 transmits only the text of the mail if the mail transmitted to the portable telephone 1 is constructed only by the text, but if the attached file exists, it transmits the text of the mail and information indicating the presence of the attached file to the portable telephone 1.

When receiving the text of the mail and information indicating the presence of the attached file from the groupware server 2, the portable telephone 1 displays a display screen which displays the mail text and the presence of the attached file as shown in FIG. 16 on the display section 12. If the user selects storage of the attached file on the display screen, the portable telephone 1 transmits an instruction for storage of the attached file to the groupware server 2 (step S7).

When receiving the instruction of storage of the attached file from the portable telephone 1, the groupware server 2 transmits a request for user authentication with respect to the user who wants to store the attached file to the Internet binder 3 (step S8). At this time, the user ID and password transmitted from the portable telephone 1 as the log-in data in the step S3 are transmitted as data for user authentication from the groupware server 2 to the Internet binder 3.

The Internet binder 3 performs the user authentication process based on the user ID and password received from the groupware server 2. The user authentication process is performed by determining whether or not the user ID and password received from the groupware server 2 coincide with the contents recorded on the user information database 33a. When the user is authenticated by the user authentication process, the Internet binder 3 transmits data indicating that the result of the user authentication is normal (OK) to the groupware server 2 (step S9).

When receiving information indicating that the result of the user authentication is OK from the Internet binder 3, the groupware server 2 transmits an instruction for storage of the attached file to the Internet binder 3 (step S10). As the instruction of storage of the attached file, information used for specifying a folder of the storage destination based on the storage destination specifying database 23b is transmitted.

When receiving the instruction of storage of the attached file, the Internet binder 3 determines whether or not the attached file can be stored in the specified storage destination based on the account name and folder name recorded on the storage destination database 33b. If it is determined in the above determination process that the attached file can be stored in the specified storage destination, the Internet binder 3 transmits a notification for permitting (giving OK for) storage of the attached file to the groupware server 2 (step S11).

When receiving notification of permission to store the attached file from the Internet binder 3, the groupware server 2 starts to transfer the attached file to the Internet binder 3 (step S12). After this, when the groupware server 2 terminates transfer of the attached file, it transmits notification indicating termination of transfer of the attached file to the Internet binder 3 (step S13).

While the attached file is being transferred from the groupware server 2, the Internet binder 3 sequentially stores the attached file into a specified folder. When receiving notification indicating termination of transfer of the attached file from the groupware server 2, the Internet binder 3 stores the respective items of the storage file information database 33c and transmits notification indicating completion of storage of the attached file to the groupware server 2.

As described above, if the attached file exists in the mail addressed to the user and logged in by use of the portable telephone, information indicating the presence of the attached file is transmitted to the portable telephone in addition to the text of the mail, and if storage of the attached file is instructed by the portable telephone, the attached file is stored into a previously specified folder.

As a result, occurrence of useless traffic which may be caused by transmitting the attached file to the portable telephone can be prevented.

Next, the operation of the groupware server 2 is explained in detail.

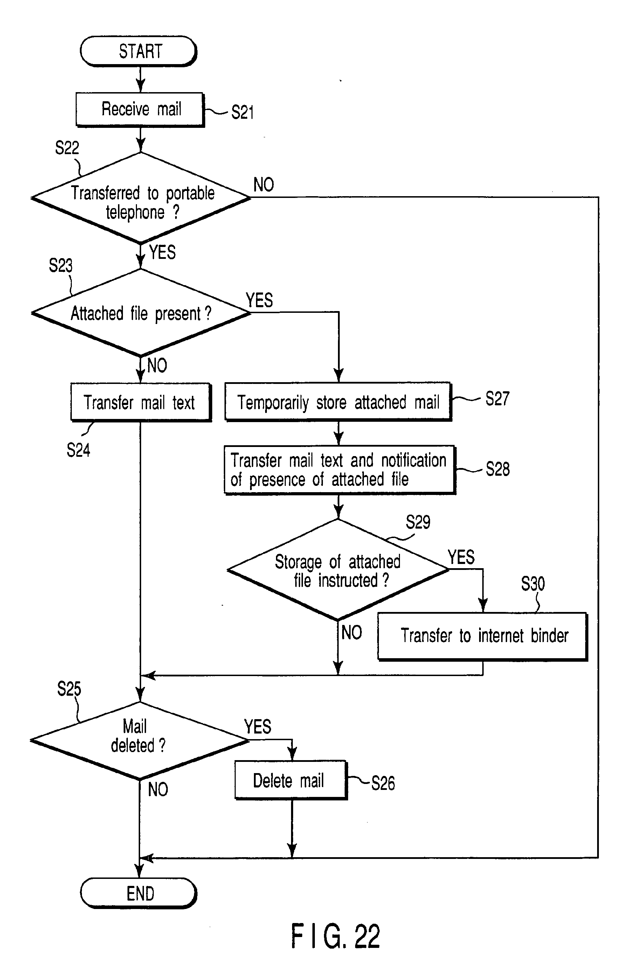

FIG. 22 is a flowchart for illustrating the operation of the groupware server 2.

That is, when receiving a mail (step S21), the controller 21 of the groupware server 2 stores the entire portion of the received mail in the mail box 23d provided in the HDD 23. When connected to the portable telephone 1, the controller 21 of the groupware server 2 determines whether or not the mail (received mail) in the mail box 23d is transferred to the portable telephone 1 based on the mail information database (step S22). If the controller 21 determines in the above determining step that it does not transfer the mail to the portable telephone 1, the controller 21 terminates the process.

Further, if the controller 21 determines in the above determining step that it transfers the mail to the portable telephone 1, the controller 21 determines whether or not an attached file is present in the mail to be transferred to the portable telephone 1 (step S23).

If the controller 21 determines in the above determining step that there is no attached file, it determines a mail address of the portable telephone 1 to which it transfers the text of the mail based on the contents recorded in the mail information database 23a. When the controller 21 determines a mail address of the transfer destination, it transfers the text of the mail to the portable telephone 1 of the determined mail address (step S24).

When transferring the text of the mail to the portable telephone 1, the controller 21 determines whether or not the mail is deleted based on the setting previously made to indicate whether the mail after transfer is deleted or not (step S25).

When determining in the above determining step that the mail is deleted, the controller 21 deletes the mail (step S26) after transferring the mail to the portable telephone 1 and then terminates the process. Further, when determining in the above determining step that the mail is not deleted, the controller 21 terminates the process while the received mail is not deleted and is kept stored in the mail box 23d.

Further, if the controller 21 determines in the step S23 that the attached file is present, it temporarily stores the attached file in the memory 22 or HDD 23 (step S27). At the same time, the controller 21 transfers the text of the mail and notification indicating that the attached file is present to the portable telephone 1 (step S28).

In the portable telephone which has received the text of the mail and notification indicating that the attached file is present, an instruction indicating whether the attached file is stored or not is made by the operation of the user. The groupware server 2 is operated based on the instruction from the portable telephone 1 indicating whether the attached file is stored or not (step S29).

For example, if an instruction indicating that the attached file is not stored is received from the portable telephone 1 ("NO" in the step S29), the controller 21 effects the step S25 and performs the process for the mail.

Further, if an instruction indicating that the attached file is stored is received from the portable telephone 1 ("YES" in the step S29), the controller 21 effects the storage process of a corresponding attached file.

In the storage process of the attached file, first, the storage destination (folder name) of the attached file in the Internet binder 3 is determined by the controller 21 based on the storage destination specifying database 23b. If the storage destination of the attached file is determined in the above determination step, the controller 21 specifies the folder of the storage destination and transfers the attached file to the Internet binder 3 (step S30).

Thus, when the attached file is delivered from the groupware server 2 to the Internet binder 3, the controller 21 sets a flag indicating that the attached file is delivered in the item of the attached file delivery flag in the received mail database.

If the attached file storage process is completed, the controller 21 effects the step S25 and performs the process for the mail.

As described above, since the groupware server manages an electronic mail transferred to the portable telephone while the electronic mail is divided into the text of the mail and the attached file, the attached file can be stored in the previously set storage destination without transmitting the attached file which is difficult to be actively used on the portable telephone side and thus an electronic mail with the attached file can be efficiently managed.

Further, if the attached file is attached to an electronic mail transferred to the portable telephone, the groupware server notifies the portable telephone that the text of the mail and the attached file are present.

Therefore, it is possible to inform the user of the presence of the attached file without transmitting the attached file to the portable telephone and effectively utilize the attached file while suppressing an increase in the communication traffic.

Further, if the attached file is attached to an electronic mail transferred to the portable telephone, the groupware server notifies the portable telephone that the text of the mail and the attached file are present and stores the attached file in a previously set storage destination in the Internet binder 3 based on an attached file storage instruction issued from the portable telephone in response to the above notification.

Therefore, it is possible to notify the user of the presence of the attached file without transmitting the attached file to the portable telephone and suppress an increase in the communication traffic. Further, the attached file can be stored according to the requirement of the user and the attached file can be effectively utilized.

## Claims

1. A server apparatus (2) in which a groupware is operated, **characterized by** comprising:
a memory (23) to store data;
an interface (25) configured to transmit data to a mobile terminal (1); and
a controller (21) configured to form data for transmission to the mobile terminal (1) and separately manage the thus formed data for transmission and data among data addressed to the mobile terminal (1) which is not transmitted to the mobile terminal (1) and is stored in said memory (23) when the data addressed to the mobile terminal (1) is transmitted to the mobile terminal (1) via said interface (25).

2. The server apparatus (2) according to claim 1, the data for transmission to the mobile terminal (1) formed by said controller (21) includes information indicating the contents of the data addressed to the mobile terminal (1) and information indicating the presence of data which is not transmitted yet and is associated with the former information.

3. The server apparatus (2) according to claim 1, the data for transmission to the mobile terminal (1) formed by said controller (21) includes text data and information indicating that file data attached to the text data is present and data stored in said memory (23) is the file data attached to the text data in a case where the data addressed to the mobile terminal (1) includes the text data and the file data attached to the text data.

4. The server apparatus (2) according to claim 1, said controller (21) forms data for transmission to the mobile terminal (1) based on the data addressed to the mobile terminal (1), transmits the thus formed data for transmission to the mobile terminal (1) via said interface (25) and stores data among the data addressed to the mobile terminal (1) which has not been transmitted to the mobile terminal (1) into said memory (23).

5. The server apparatus (2) according to claim 1, said controller (21) forms data for transmission to the mobile terminal (1) based on the data addressed to the mobile terminal (1), transmits the thus formed data for transmission to the mobile terminal (1) via said interface (25) and stores data among the data addressed to the mobile terminal (1) which has not been transmitted to the mobile terminal (1) into said memory (23) according to an instruction from the mobile terminal (1).

6. The server apparatus (2) according to claim 1, said controller (21) forms data for transmission to the mobile terminal (1) when the data addressed to the mobile terminal (1) is transmitted to the mobile terminal (1), transmits the thus formed data for transmission to the mobile terminal (1) via said interface (25) and stores data among the data addressed to the mobile terminal (1) which has not been transmitted to the mobile terminal (1) into a previously set storage location according to an instruction from the mobile terminal (1).

7. A network system **characterized by** comprising:
a first apparatus (2) in which a groupware is operated; and
a second apparatus (3) connected to said first apparatus (2) via a network;
said first apparatus (2) includes a first interface (25) configured to transmit data to a mobile terminal (1), a second interface (24) configured to transmit data to said second apparatus (3), and a controller (21) configured to form data for transmission to the mobile terminal (1) when data addressed to the mobile terminal (1) is transmitted to the mobile terminal (1), transmit the thus formed data for transmission to the mobile terminal (1) via the first interface (25) and transmit data among the data addressed to the mobile terminal (1) which has not been transmitted to the mobile terminal (1) to said second apparatus (3) via the second interface (24) as storage data according to an instruction from the mobile terminal (1), and said second apparatus (3) includes a memory (33) to store storage data transmitted from said first apparatus (2) via the second interface (24).

8. The network system according to claim 7, the controller (21) of said first apparatus (2) transmits information indicating a storage location together with the storage data to said second apparatus (3) via the second interface (24) and the storage data is stored in a storage location of the memory (33) of said second apparatus (3) based on information indicating the storage location and received from said first apparatus (2).

9. A server apparatus (2) in which a groupware is operated, **characterized by** comprising:
a memory (23) to store data;
an interface (25) configured to transmit data to a mobile terminal (1); and
a controller (21) configured to manage an electronic mail in the groupware and form a text of the electronic mail for transmission to the mobile terminal (1) if file data attached to the electronic mail addressed to the mobile terminal (1) exists and separately managing the thus formed text of the electronic mail and attached file.

10. The server apparatus (2) according to claim 9, the data for transmission to the mobile terminal (1) formed by said controller (21) includes information indicating a text of the electronic mail and information indicating that file data attached to the electronic mail is present and data stored in said memory (23) is the file data attached to the text data in a case where the electronic mail addressed to the mobile terminal (1) includes the text and the file data attached to the text.

11. The server apparatus (2) according to claim 9, said controller (21) manages the electronic mail in the groupware, forms the text of the electronic mail for transmission to the mobile terminal (1) if file data attached to the electronic mail addressed to the mobile terminal (1) is present, transmits the thus formed text of the electronic mail to the mobile terminal (1) via said interface (25) and stores the attached file into said memory (23).

12. The server apparatus (2) according to claim 9, said controller (21) manages the electronic mail in the groupware, forms the text of the electronic mail for transmission to the mobile terminal (1) if file data attached to the electronic mail addressed to the mobile terminal (1) is present, transmits the thus formed text of the electronic mail to the mobile terminal (1) via said interface (25) and stores the attached file into a previously set storage location.

13. The server apparatus (2) according to claim 9, said controller (21) manages the electronic mail in the groupware, forms the text of the electronic mail for transmission to the mobile terminal (1) if file data attached to the electronic mail addressed to the mobile terminal (1) is present, transmits the thus formed text of the electronic mail to the mobile terminal (1) via said interface (25) and stores the attached file into said memory (23) according to an instruction from the mobile terminal (1).
